# EUROPÄISCHE PATENTANMELDUNG

(11) **EP 2 378 222 A2**
(43) Veröffentlichungstag der Anmeldung: **19.10.2011**
(21) Anmeldenummer: 11161813.8
(22) Anmeldetag: 11.04.2011
(51) Int. Cl.: F25B 5/02, F25B 6/04, F25B 43/00

(54) **Kälteanlage mit Wärmerückgewinnung und Verfahren zum Betreiben der Kälteanlage**

(30) Priorität: 13.04.2010 DE 102010003915
(71) Anmelder: Weska Kälteanlagen Gmbh, 08491 Netzschkau (DE)
(72) Erfinder: Fuhrmann, Jörg, 08491 Netzschkau (DE)
(74) Vertreter: Sperling, Thomas

(57) **Zusammenfassung**

Die Erfindung betrifft eine Kälteanlage (1) mit einem geschlossenen Kältemittelkreislauf, der in Strömungsrichtung des Kältemittels eine Verdichtereinheit (5, 6), einen Wärmeübertrager (7) eines Systems zur Wärmerückgewinnung, einen Kondensator (8, 16), einen Sammler (9), ein Expansionsorgan (11, 13, 15) und einen Verdampfer (2, 3, 4) aufweist. Zwischen dem Wärmeübertrager (7) des Systems der Wärmerückgewinnung und dem Kondensator (8, 16) ist ein Regelventil (24) angeordnet, das mit einer Regelvorrichtung (25) verbunden ist. Der Öffnungsgrad des Regelventils (24) ist abhängig von der Leistung des Wärmeübertragers (7) des Systems der Wärmerückgewinnung, vom Kondensationsdruck des Kältemittels und von der Austrittstemperatur des Wärmeträgermediums des Wärmeübertragers (7) des Systems der Wärmerückgewinnung zwischen 0 % und 100 % regelbar. Außerdem betrifft die Erfindung ein Verfahren zum Betreiben der Kälteanlage, wobei die Öffnungsgrade des Regelventils (24) und eines dem Regelventil (24) parallel geschalteten Ventils (23) abhängig von der Leistung des Wärmeübertragers (7) des Systems der Wärmerückgewinnung jeweils zwischen 0 % und 100 % und damit die Masseströme des Kältemittels durch die Ventile (23, 24) geregelt werden.

## Beschreibung

Die Erfindung betrifft eine Kälteanlage mit Wärmerückgewinnung, aufweisend einen geschlossenen Kältemittelkreislauf mit einer Verdichtereinheit, einem Wärmeübertrager eines Systems zur Wärmerückgewinnung, einem Kondensator, einem Sammler, einem Expansionsorgan und einem Verdampfer. Des Weiteren betrifft die Erfindung ein Verfahren zum Betreiben der Kälteanlage mit einem System zur Wärmerückgewinnung.

Bei gattungsgemäßen Kälteanlagen ist der Wärmeübertrager des Systems der Wärmerückgewinnung in Strömungsrichtung des Kältemittels nach dem Verdichter und vor dem Kondensator angeordnet. Kälteanlagen mit einem System zur Wärmerückgewinnung ist zu eigen, nicht die vollständige, bei Hochdruck anfallende Wärme im Kondensator an die Umgebungsluft zu übertragen, sondern vielmehr das als Heißgas aus dem Verdichter austretende Kältemittel innerhalb des zusätzlichen Wärmeübertragers abzukühlen beziehungsweise zu enthitzen und/oder je nach Wärmebedarf zumindest zum Teil zu verflüssigen. Die dabei abgegebene Wärme wird an das System der Wärmerückgewinnung übertragen und in diesem beispielsweise zum Erwärmen eines Mediums innerhalb eines Heizungssystem genutzt. Im Kondensator wird das Kältemittel je nach Eintrittszustand weiter enthitzt und/oder verflüssigt.

Die sogenannte Enthitzungswärme weist im Vergleich zur zum Kondensationsdruck zugehörigen Kondensationstemperatur ein wesentlich höheres Temperaturniveau auf und ist damit besonders zur Rückgewinnung in Heizungssystemen oder zur Warmwasserbereitung geeignet, das heißt, wenn die erforderliche Heizmitteltemperatur höher als die Kondensationstemperatur des Kältemittels ist. Als Heizmittel beziehungsweise Wärmeträger wird Wasser verwendet. Die Kondensationstemperatur und damit der Kondensationsdruck unterliegen insbesondere bei mit Umgebungsluft beaufschlagten Kondensatoren den wechselnden Umgebungsbedingungen. Im Hinblick auf das Temperaturniveau der Übertragung der Enthitzungswärme innerhalb der Wärmerückgewinnung ist der Kondensationsdruck auf einen bestimmten Wert einzuregeln und zu begrenzen, da die Vorlauftemperatur des Wärmeträgers im Wärmeübertrager des Wärmerückgewinnungssystems auch vom Druck des Kältemittels im nachgeschalteten Kondensator abhängig ist.

Die Kombination von Kälte- und gleichzeitigem Wärmebedarf tritt bei einer Vielzahl von Anwendungen auf, wie zum Beispiel beim Betrieb einer Kühlzelle zur Lebensmittelkühlung und gleichzeitiger Warmwasserbereitung einer Großküche oder beim Betrieb einer Verbundkälteanlage eines Lebensmittelsupermarktes und gleichzeitiger Beheizung der Verkaufs- und/oder Büroräume.

Aus der DE 298 10 584 U1 geht eine temperaturgeführte Regelung einer kombinierten Wärmepumpe-Kälteanlage zur Optimierung der Leistungszahl hervor. Das Prinzip der Anlage beruht auf der gleichzeitigen Erzeugung beziehungsweise Bereitstellung von Kälte auf Niederdruckniveau bei möglichst hoher Verdampfungstemperatur und der Abgabe von Nutzwärme an beispielsweise ein Heizsystem auf Hochdruckniveau bei tiefstmöglicher Kondensationstemperatur. Die Anlage mit geschlossenem Kältemittelkreislauf besteht aus mehreren Wärmeübertragern, die als Verdampfer oder Kondensatoren eingesetzt werden.

Ein Verfahren zur Nutzung der Verflüssigungswärme einer Kälteanlage wird auch in der DE 36 09 313 C2 beschrieben. Die Verflüssigungswärme des Kältemittelkreislaufes wird zur Wärmerückgewinnung in einem ersten Wärmeübertrager an einen flüssigen Wärmeträger abgegeben. Besteht kein Bedarf an Heizwärme bei gleichzeitigem Bedarf an Nutzkälte, wird ein zweiter Wärmeübertrager durch ein Kühlmittel, zum Beispiel Luft, beaufschlagt und die Verflüssigungswärme an die Umgebungsluft übertragen. Über die Änderung des Öffnungsquerschnittes eines nach dem zweiten Wärmeübertrager und vor einem Sammelbehälter angeordneten Durchfluss-Steuerventils wird das Füllstandsniveau des flüssigen Kältemittels im zweiten Wärmeübertrager und damit dessen wirksame Wärmeübertragungsfläche, abhängig vom Öffnungsgrad des Durchfluss-Steuerventils, verändert.

Auch aus der DE 37 35 808 A1 gehen ein Verfahren zum Betreiben einer Kälteanlage und eine Kälteanlage mit einem Wärmerückgewinnungssystem hervor. Die Kälteanlage weist innerhalb der Kondensatleitung, ebenso wie die in der DE 36 09 313 C2 offenbarte Anlage, ein im Stand der Technik bekanntes Flutventil zum Fluten des Kondensators und damit zum Regeln des Kondensationsdruckes auf.

Herkömmliche Flutventile sind zur Einhaltung eines konstanten und ausreichend hohen Kondensationsdruckes in Kälteanlagen, insbesondere im Winterbetrieb, vorgesehen. Das Flutventil öffnet beispielsweise bei Überschreiten eines Schwellwertes des Druckes auf der Eintrittsseite, das heißt dem Kondensationsdruck der Anlage, und schließt bei Unterschreiten des Schwellwertes.

Die im Stand der Technik bekannten Kälteanlagen mit einem Wärmerückgewinnungssystem und lediglich einem Flutventil innerhalb der Kondensatleitung sind für die Regelung von komplexen Verbundkälteanlagen mit mehreren Verbrauchern und damit einer Vielzahl von Verdichtern oder Verdichtereinheiten nur schlecht geeignet. Beispielsweise kann einerseits das Zuschalten eines Verdichters bei Kältebedarf eines oder mehrerer Verbraucher aufgrund der großen Trägheit des Systems zu einem schnellen und ungewollten Ansteigen des Hochdruckes, auch als Kondensationsdruck bezeichnet, führen, da der überflutete Kondensator nicht in der erforderlichen kurzen Zeit entleerbar ist und damit nicht ausreichend Fläche für die Wärmeübertragung zur Verfügung steht. Die Hochdruckwächter der Verdichter, die dem Schutz der Verdichter gegen einen zu hohen Verdichtungsenddruck dienen, schalten die Verdichter bei Überschreiten eines vorgegebenen Schwellwertes ab. Durch Abschalten der Verdichter wird jedoch die Versorgung der Verbraucher unterbrochen. Andererseits ist durch das überflutete Betreiben der Kälteanlage ein hoher Kältemittelbedarf notwendig, der kostenintensiv ist und beispielsweise beim Einsatz brennbarer Kältemittel zudem das Explosionsrisiko erhöht.

Aufgabe der vorliegenden Erfindung ist es, eine Kälteanlage sowie ein Verfahren zum Betreiben einer Kälteanlage zur Verfügung zu stellen, mit der der Bedarf an Kälteleistungen bei gleichzeitigem Bedarf an Wärmeleistung eines Systems der Wärmerückgewinnung abgedeckt werden. Die Kälteanlage ist derart auszubilden, dass die Vorlauftemperatur des Wärmeträgers des Systems der Wärmerückgewinnung kältemittelseitig regelbar ist. Die Anlage soll bei der Installation und beim Betreiben weniger kostenintensiv als die im Stand der Technik bekannten Anlagen sein und eine sichere Betriebsweise ermöglichen.

Die Aufgabe wird erfindungsgemäß durch eine Kälteanlage mit einem geschlossenen Kältemittelkreislauf gelöst, die in Strömungsrichtung des Kältemittels mindestens eine Verdichtereinheit, einen Wärmeübertrager eines Systems zur Wärmerückgewinnung, einen luftbeaufschlagten Kondensator, einen Sammler, ein Expansionsorgan und einen Verdampfer aufweist.

Im Kreislauf der Kälteanlage ist zwischen dem Wärmeübertrager des Systems der Wärmerückgewinnung und dem Kondensator zusätzlich ein Ventil angeordnet, das konzeptionsgemäß mit einer Regelvorrichtung verbunden ist. Das Ventil wird nachfolgend auch als Regelventil bezeichnet. Mittels der Regelvorrichtung ist der Öffnungsgrad des Regelventils abhängig von der Leistung des Wärmeübertragers des Systems der Wärmerückgewinnung, vom Kondensationsdruck des Kältemittels und von der Austrittstemperatur des Wärmeträgermediums des Wärmeübertragers des Systems der Wärmerückgewinnung zwischen 0 % und 100 % regelbar.

Der Öffnungsgrad des Regelventils bezieht sich dabei auf den maximalen Strömungsquerschnitt als offenen Querschnitt für das hindurchströmende Fluid. Bei einem Öffnungsgrad von 0 % ist das Ventil vollständig geschlossen. Bei einem Öffnungsgrad von 100 % ist das Ventil vollständig geöffnet. Der Öffnungsgrad von 100 % definiert den Nennhub des Ventils. In dem Bereich zwischen 0 % und 100 % befindet sich das Ventil in einem mehr oder weniger geöffneten Zustand.

Das zusätzlich im Kreislauf der Kälteanlage zwischen dem Wärmeübertrager des Systems der Wärmerückgewinnung und dem Kondensator angeordnete Regelventil kann zwischen den Endstellungen des Öffnungsgrades von 0 % bis 100 % vorteilhaft stufenlos eingestellt werden. Die erfindungsgemäße Regelvorrichtung dient dabei zum Regeln des Öffnungsgrades des Ventils.

Nach einer bevorzugten Ausgestaltung der Erfindung weist die Regelvorrichtung einen Sensor zum Bestimmen des Kondensationsdrucks des Kältemittels sowie einen Sensor zum Bestimmen der Austrittstemperatur des Wärmeträgermediums des Wärmeübertragers auf. Die mittels der Sensoren ermittelten Werte Kondensationsdruck und Vorlauftemperatur des Wärmeträgers werden innerhalb der Regelvorrichtung verarbeitet. Die Regelvorrichtung sendet anschließend ein Regelsignal an das Regelventil und regelt somit den Öffnungsgrad des Ventils.

Eine Weiterbildung der Erfindung besteht darin, dass dem erfindungsgemäßen Regelventil zwischen dem Wärmeübertrager des Systems der Wärmerückgewinnung und dem Kondensator ein weiteres, ein zweites, Ventil parallel geschaltet ist. Beide Ventile können unabhängig voneinander durchströmt werden, das heißt je nach Betriebsweise werden die Ventile entweder gleichzeitig beziehungsweise parallel durchströmt, lediglich eines der Ventile wird durchströmt, während das andere geschlossen ist oder keines der Ventile wird durchströmt. Die maximale Querschnittsfläche, das heißt der maximale Strömungsquerschnitt bezüglich des hindurchströmenden Fluids, des zweiten Ventils ist dabei größer als die maximale Querschnittsfläche des Regelventils. Die Durchmesser der maximalen Strömungsquerschnitte der Ventile weisen bevorzugt ein Verhältnis von 35/22 auf.

Das zweite Ventil ist insbesondere für Betriebszustände vorgesehen, bei denen eine große Menge gasförmigen Kältemittels zum Kondensator strömt. Größere Mengen gasförmigen Kältemittels werden dabei überwiegend im Sommer beziehungsweise bei sommerlichen Außenbedingungen oder Betriebsbedingungen zum Kondensator geleitet, da einerseits durch die Verdampfer ein hoher Bedarf an Kälteleistung abgedeckt und in den Kältemittelkreislauf aufgenommen, aber andererseits durch das System der Wärmerückgewinnung nur wenig oder keine Wärme abgeführt wird. Dieser Betriebsmodus wird im Weiteren auch als Betrieb ohne Wärmerückgewinnung bezeichnet. Die Verflüssigung des Kältemittels findet zum Großteil oder gänzlich innerhalb des Kondensators statt.

Das Regelventil mit kleinerem maximalen Strömungsquerschnitt gegenüber dem zweiten Ventil ist bevorzugt für den sogenannten Winterbetrieb ausgelegt, bei dem lediglich kleine Mengen gasförmigen Kältemittels zum Kondensator geleitet werden, da der Hauptteil der Verflüssigung aufgrund einer ausreichend hohen abzuführenden Wärmeleistung bereits im Wärmeübertrager des Systems der Wärmerückgewinnung stattfindet. Dieser Betriebsmodus wird im Weiteren auch als Betrieb mit Wärmerückgewinnung bezeichnet.

Nach einer vorteilhaften Ausgestaltung der Erfindung ist innerhalb des Kältemittelkreislaufes zwischen dem Ausgang des Wärmeübertragers des Systems der Wärmerückgewinnung und dem Sammler ein Bypass angeordnet. Durch den Bypass, auch als Bypassleitung bezeichnet, wird ein Teil des Kältemittels nach dem Austritt aus dem Wärmeübertrager direkt in den Sammler geleitet. Damit wird vorteilhaft vermieden, den gesamten Massestrom des Kältemittels durch den Kondensator zu leiten, der im Wesentlichen lediglich zur Verflüssigung des gas- beziehungsweise dampfförmigen Kältemittels dient. Insbesondere der Anteil bereits verflüssigten Kältemittels wird vorteilhaft durch den Bypass abgeführt, sodass die energetische Effizienz des Kondensators gesteigert werden kann. Damit steht entweder eine größere Fläche für die Wärmeübertragung im Kondensator zur Verfügung oder der Kondensator kann kleiner und kompakter gefertigt werden.

In dem Bypass ist bevorzugt ein Hochdruckschwimmer vorgesehen. Der Hochdruckschwimmer lässt das im Wärmeübertrager des Systems der Wärmerückgewinnung verflüssigte Kältemittel, das heißt das am Austritt des Wärmeübertragers flüssig vorliegende Kältemittel, in den Sammler passieren. Gleichzeitig verhindert der Hochdruckschwimmer das Durchströmen gasförmigen Kältemittels, das dadurch zwangsläufig durch das zwischen dem Wärmeübertrager des Systems der Wärmerückgewinnung und dem Kondensator angeordnete Regelventil und/oder dem Regelventil parallel geschaltete Ventil strömt. Die parallel angeordneten Ventile werden somit ausschließlich mit gasförmigem Kältemittel beaufschlagt.

Der Hochdruckschwimmer, dessen Funktionsweise auf dem Prinzip der Schwerkraft beruht, dient der Abscheidung des flüssigen Anteils des Kältemittels aus dem gesamten Massestrom, das heißt der Trennung von flüssigem und dampf- beziehungsweise gasförmigem Kältemittel. Die Druckunterschiede des Kältemittels vor und nach dem Hochdruckschwimmer sind unbedeutend und vernachlässigbar. Das ausschließlich gasförmig am Regelventil anliegende Kältemittel ist komprimierbar. Durch die Regelung des Öffnungsgrades des Ventils ist der Kondensationsdruck im Kältemittelkreislauf, das heißt der Verdichtungsenddruck, variierbar. Gleichzeitig ist damit die Eintrittstemperatur des Kältemittels in den Wärmeübertrager des Systems der Wärmerückgewinnung einstellbar, die wiederum der Regelung der Vorlauftemperatur des Wärmeträgermediums der Wärmerückgewinnung dient. Nach einer bevorzugten Ausgestaltung der Erfindung ist der Kondensator mit dem nachgeschalteten Sammler zweigeteilt ausgebildet und kann mittels einer Steuereinrichtung und Ventilen auf unterschiedliche Art und Weise betrieben werden. Entweder ist nur ein Teil des Kondensators mit dem dazugehörigen Sammler in Betrieb, wobei der andere Teil des Kondensators mit dem dazugehörigen Sammler nicht mit Kältemittel beaufschlagt ist. Der nicht mit Kältemittel beaufschlagte Bereich der Kälteanlage wird dabei durch geschlossene Ventile vom übrigen Kältemittelkreislauf abgetrennt.

Durch die Abtrennung nicht mit Kältemittel beaufschlagter Teile des Kondensators und des Sammlers vom übrigen Kältemittelkreislauf, in denen sich Kältemittel ansammeln kann, lässt sich das innere Volumen des Kältemittelkreislaufes reduzieren, was vorteilhaft die Kältemittelmenge beziehungsweise Füllmenge der Anlage minimiert. Das sich in den nicht in Betrieb befindlichen Teilen der Kälteanlage angesammelte Kältemittel muss ansonsten nachteilig durch eine größere Füllmenge ausgeglichen werden.

Je nach Betriebsmodus können jedoch auch beide Teile des Kondensators und die dazugehörigen Sammler gleichzeitig betrieben beziehungsweise mit Kältemittel beaufschlagt werden.

Beim erfindungsgemäßen Verfahren zum Betrieb der Kälteanlage werden die Öffnungsgrade des Regelventils und des dem Regelventil parallel geschalteten Ventils abhängig von der Wärmeleistung des Wärmeübertragers des Systems der Wärmerückgewinnung jeweils zwischen 0 % und 100 % geregelt. Damit werden nach der Konzeption der Erfindung die Masseströme des Kältemittels durch die Ventile abhängig von den Betriebsbedingungen verändert.

Nach einer bevorzugten Ausgestaltung der Erfindung umfasst das Verfahren während des Betriebs der Kälteanlage mit Wärmerückgewinnung, das heißt bei hoher erforderlicher zu übertragender Leistung des Wärmeübertragers des Systems der Wärmerückgewinnung, folgende Schritte:
- Schließen des dem Regelventil parallel geschalteten Ventils,
- Bestimmen des Kondensationsdrucks des Kältemittels und
- Bestimmen der Austrittstemperatur des Wärmeträgermediums des Wärmeübertragers des Systems der Wärmerückgewinnung,
- Übermitteln der ermittelten Werte des Kondensationsdrucks des Kältemittels und der Austrittstemperatur des Wärmeträgermediums an eine Regelvorrichtung,
- Vergleich des ermittelten Wertes des Kondensationsdrucks mit einem Maximalwert und
- Vergleich des ermittelten Wertes der Austrittstemperatur des Wärmeträgermediums mit einem Sollwert,
- Senden des Regelsignals an das Regelventil sowie
- Regeln des Öffnungsgrades des Regelventils, abhängig vom Kondensationsdruck des Kältemittels und der Austrittstemperatur des Wärmeträgermediums des Wärmeübertragers des Systems der Wärmerückgewinnung.

Der zum Vergleich des ermittelten Wertes des Kondensationsdrucks herangezogene Maximalwert richtet sich dabei nach den den Verdichtern zugeordneten Hochdruckwächtern. Die Hochdruckwächter schalten die Verdichter zum Schutz vor zu hohen Betriebsdrücken bei Erreichen eines Maximaldruckes aus Sicherheitsgründen ab. Der Kondensationsdruck des Kältemittels darf folglich den maximal zulässigen Betriebsdruck der Verdichter, die innerhalb der Regelvorrichtung hinterlegt sind, nicht überschreiten.

Der zum Vergleich des ermittelten Wertes der Austrittstemperatur des Wärmeträgermediums des Wärmeübertragers des Systems der Wärmerückgewinnung herangezogene Sollwert entspricht der erforderlichen Vorlauftemperatur des Wärmeträgermediums, die sich nach einer innerhalb der Regelvorrichtung hinterlegten Heizkurve ergibt. Zur Einhaltung einer gleichbleibend hohen Vorlauftemperatur des Wärmeträgermediums wird der Wärmeträgerstrom zusätzlich durch Regelorgane innerhalb des Wärmeträgerkreislaufes geregelt.

Nach einer weiteren vorteilhaften Ausgestaltung der Erfindung umfasst das Verfahren während des Betriebs der Kälteanlage ohne Wärmerückgewinnung, das heißt bei sehr geringer erforderlicher zu übertragender oder keiner Leistung des Wärmeübertragers des Systems der Wärmerückgewinnung, folgende Schritte:
- vollständiges Öffnen des dem Regelventil parallel geschalteten Ventils und
- Schließen des Regelventils.

Bei ungeregeltem konstanten Querschnitt des Regelventils oder bei geschlossenem Regelventil wird der Kondensationsdruck nicht mittels Parametern des Kältemittels geregelt, sondern ergibt sich aus den Umgebungsbedingungen des Kondensators, das heißt beim luftbeaufschlagten Kondensator aus den Zustandsparametern der Umgebungsluft.

Zusammenfassend wird der Öffnungsgrad des Regelventils folglich in Abhängigkeit von der Leistung des Wärmeübertragers des Systems der Wärmerückgewinnung, vom Kondensationsdruck des Kältemittels und von der Austrittstemperatur des Wärmeträgermediums des Wärmeübertragers des Systems der Wärmerückgewinnung geregelt.

Während des Verfahrens zum Betrieb der Kälteanlage wird das verdichtete Kältemittel innerhalb des Wärmeübertragers des Systems der Wärmerückgewinnung enthitzt und/oder verflüssigt. Am Austritt des Wärmeübertragers dampfförmig vorliegendes Kältemittel wird anschließend im Kondensator vollständig verflüssigt. Dabei wird das im Wärmeübertrager des Systems der Wärmerückgewinnung bereits verflüssigte Kältemittel bevorzugt durch den Bypass um den Kondensator herum geführt und direkt in den Sammler geleitet. Der innerhalb des Bypasses angeordnete Hochdruckschwimmer lässt flüssiges Kältemittel passieren und verhindert gleichzeitig das Durchströmen gasförmigen Kältemittels. Damit wird insbesondere das Regelventil vorteilhaft ausschließlich mit gasförmigem Kältemittel beaufschlagt.

Von besonderem Vorteil ist, wenn der zweigeteilte Kondensator je nach Verflüssigungsleistung auf unterschiedliche Weise von Kältemittel durchströmt wird. Dabei wird ein Teil des zweigeteilt ausgebildeten Kondensators mit nachgeschaltetem Sammler mit Kältemittel beaufschlagt, während gleichzeitig der andere Teil des zweigeteilt ausgebildeten Kondensators mit nachgeschaltetem Sammler durch geschlossene Ventile vom Kältemittelkreislauf abgetrennt ist. Alternativ werden abhängig von der Verflüssigungsleistung, das heißt bei hoher Leistung, beide Teile des zweigeteilt ausgebildeten Kondensators jeweils mit nachgeschaltetem Sammler mit Kältemittel beaufschlagt.

Ein Vorteil der Kälteanlage besteht darin, dass beim plötzlichen Zuschalten eines Verdichters oder einer Verdichtereinheit bei Kältebedarf eines oder mehrerer Verbraucher ein schnelles und ungewolltes Ansteigen des Hochdruckes verhindert wird, da im Gegensatz zur Verwendung sogenannter Flutventile keine Flüssigkeitssäule oder Flüssigkeitsmenge zu beseitigen oder abzulassen ist, sondern kurzzeitig lediglich Kältemittelgas verdichtet wird, das vor dem Ventil angestaut und im Gegensatz zur Flüssigkeit komprimierbar ist. Damit wird zum einen allein durch das Vorhandensein von Gas anstelle von Flüssigkeit eine Verdichtung und damit ein langsameres Ansteigen des Druckes ermöglicht. Zum anderen wird mittels des Vergrößerns der Strömungsquerschnitte der Ventile das angestaute und gegebenenfalls bereits leicht komprimierte Gas in den in Strömungsrichtung des Kältemittels nach den Ventilen angeordneten Kondensator abgeleitet.

Ein weiterer Vorteil der Kälteanlage liegt in der Reduzierung und Minimierung der Kältemittelfüllmenge, zum einen durch den Bypass mit Hochdruckschwimmer, mit dem bereits verflüssigtes Kältemittel um den Kondensator herum und direkt in den Sammler geleitet wird, und zum anderen durch die Ausführung des zweigeteilten Kondensators beziehungsweise Kondensator-Verdampfers, dessen Abschnitte je nach Bedarf und Betriebsmodus vom übrigen Kältemittelkreislauf abtrennbar sind und folglich kein zusätzliches Volumen für die Ansammlung von Kältemittel darstellen.

Weitere Einzelheiten, Merkmale und Vorteile der Erfindung ergeben sich aus der nachfolgenden Beschreibung von Ausführungsbeispielen mit Bezugnahme auf die zugehörigen Zeichnungen. Es zeigen:
- Fig. 1:: Fließbild der Kälteanlage mit Komponenten zur Wärmerückgewinnung und integrierter Wärmepumpenschaltung,
- Fig.2:: Fließbild der Kälteanlage mit Komponenten zur Wärmerückgewinnung, integrierter Wärmepumpenschaltung und integriertem Kondensator-Verdampfer und
- Fig. 3:: Fließbild der Kälteanlage mit Komponenten zur Wärmerückgewinnung, integrierter Wärmepumpenschaltung und zweigeteiltem integriertem Kondensator-Verdampfer.

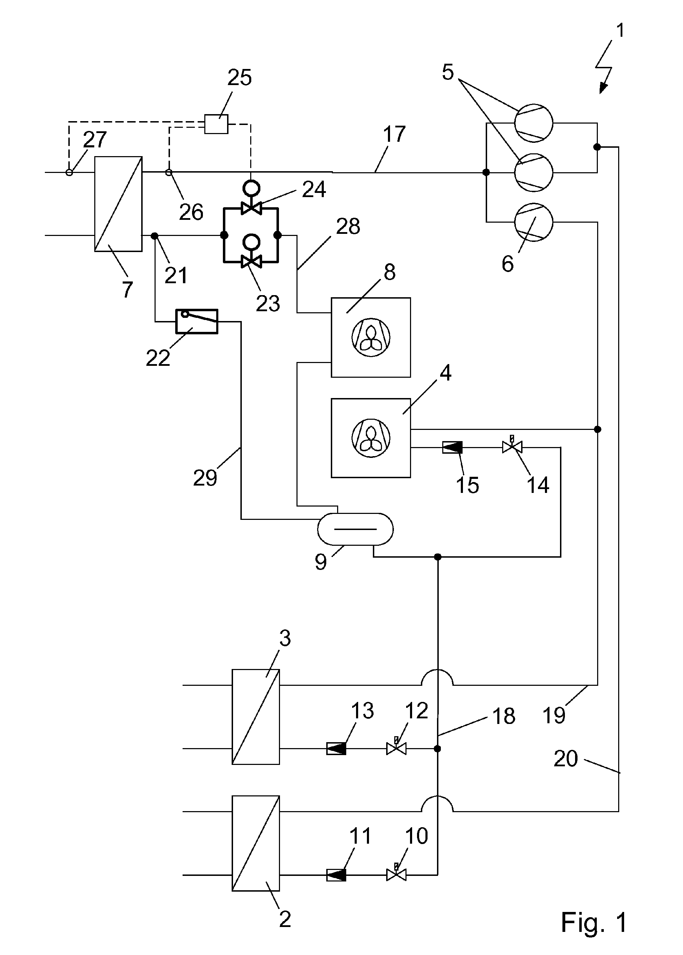

In Fig. 1 ist ein Fließbild der Kälteanlage 1 mit Komponenten zur Wärmerückgewinnung und integrierter Wärmepumpenschaltung dargestellt. Bei der Anwendung der Kälteanlage 1, beispielsweise als Supermarktkälteanlage mit verschiedenen Verbrauchern auf unterschiedlichen Temperaturniveaus, weist diese einen oder mehrere Verdichter 5, 6 auf, wobei der Verdichter 5 des Normalkühlkreislaufes und der Verdichter 6 des Kreislaufes zur Klimatisierung sowie des Kreislaufes der Wärmepumpe aufgrund unterschiedlicher Eintrittsdrücke separat angeschlossen sind. Der Wärmepumpenverdichter arbeitet reversibel und kann bei entsprechender Auslegung den gesamten erforderlichen Klimabedarf decken. Die Verdichter 5 des Normalkühlkreislaufes sind parallel geschaltet und bilden eine Verdichtereinheit.

Eine nicht dargestellte Weiterbildung der Anlage besteht darin, dass ein Tiefkühlkreislauf an den Verbund angeschlossen ist.

Die Verdichter 5, 6 komprimieren das Kältemittel aufgrund einer einheitlichen Kondensationstemperatur beziehungsweise eines einheitlichen Kondensationsdruckes in eine gemeinsame Druckleitung 17, die die Verdichtereinheit beziehungsweise die Verdichter 5, 6 mit dem Wärmeübertrager des Systems der Wärmerückgewinnung 7 verbindet. Das überhitzte, als Heißgas vorliegende Kältemittel wird im Wärmeübertrager 7 des Systems der Wärmerückgewinnung abgekühlt beziehungsweise enthitzt und bei großer abzuführender Wärmeleistung der Wärmerückgewinnung mindestens teilweise kondensiert. Je nach übertragener Wärme wird das Kältemittel somit teilweise oder vollständig enthitzt und/oder zum Teil oder vollständig verflüssigt. Die an das System der Wärmerückgewinnung übertragene Wärme kann beispielsweise zum Erwärmen eines Mediums innerhalb eines Heizungssystems genutzt werden.

Im Kondensator 8, der als luftbeaufschlagter Wärmeübertrager ausgebildet ist, wird das Kältemittel vollständig kondensiert und anschließend im Sammler 9 gespeichert.

Die Enthitzung endet beim Erreichen der Taulinie, an der der Vorgang der Kondensation beginnt. Bei vollständiger Kondensation beziehungsweise Verflüssigung liegt das Kältemittel am Austritt des jeweiligen Wärmeübertragers vollständig als Flüssigkeit vor. Findet die Kondensation nur teilweise statt, tritt das Kältemittel als Flüssigkeits-Dampf-Gemisch aus. Zwischen dem Wärmeübertrager 7 des Systems der Wärmerückgewinnung und dem Kondensator 8 sind in Strömungsrichtung des Kältemittels zwei Ventile 23, 24 in Parallelschaltung angeordnet, die zum Durchleiten von gasförmigem Kältemittel vorgesehen sind. Der maximale Durchmesser der Querschnittsfläche für das durchströmende gasförmige Kältemittel des Ventils 23 ist dabei größer als der maximale Durchmesser der Querschnittsfläche des Ventils 24, wobei das Verhältnis der Durchmesser nach einer bevorzugten Ausgestaltung 35/22 beträgt. Die Größen der Durchmesser sind durch die Durchflussmenge des Kältemittels bedingt.

Das Ventil 24 mit kleinerem Durchmesser der Querschnittsfläche ist für den Winterbetrieb und das Ventil 23 mit größerem Durchmesser ist für den Sommerbetrieb ausgelegt. Beim Einsatz der Kälteanlage 1 aus Fig. 1 innerhalb eines Lebensmittelsupermarktes wird im Sommer meist durch sämtliche Verbraucher der Kälteleistung Wärme in die Kälteanlage 1 übertragen, die zuzüglich der dem Kältemittel über die Verdichter 5, 6 zugeführten Energie im Wärmeübertrager 7 des Systems der Wärmerückgewinnung und/oder dem Kondensator 8 wieder abzuführen ist. Allerdings wird im Sommer beziehungsweise an Tagen mit hohen Außentemperaturen sowie ausreichend Sonnenstrahlung weniger Wärme zum Heizen des Lebensmittelsupermarktes oder andere Heizleistung benötigt als im Winter beziehungsweise an Tagen mit geringen Außentemperaturen. Besteht folglich lediglich ein sehr geringer oder kein Bedarf an Heizleistung bei gleichzeitigem Bedarf an Kälteleistung, wird nur wenig oder kein gasförmiges Kältemittel im Wärmeübertrager 7 des Systems der Wärmerückgewinnung verflüssigt, sodass eine große Dampfmenge aus dem Wärmeübertrager 7 austritt und durch das Ventil 23 mit großem Durchmesser der Querschnittsfläche strömt. Der große Durchsatz an dampfförmigem Kältemittel ist durch das für den Sommerbetrieb vorgesehene Ventil 23 mit großem Strömungsquerschnitt zu gewährleisten, um den Druckverlust über dem Ventil 23 so gering wie möglich zu halten. Das Ventil 24 ist geschlossen.

Das Kältemittel wird dem luftbeaufschlagten Kondensator 8 über eine Verbindungsleitung 28 zugeführt und dort vollständig verflüssigt. Bei geringem Bedarf an Heizwärme wird ein Teil des dampfförmigen Kältemittels im Wärmeübertrager 7 verflüssigt. Der flüssige Anteil des Kältemittels wird über einen Bypass 29 um den Kondensator 8 direkt in den Sammler 9 geleitet, wobei der Sammler 9 durch einen im Bypass 29 angeordneten Hochdruckschwimmer 22 vom Wärmeübertrager 7 getrennt ist. Das aus dem Wärmeübertrager 7 austretende flüssige Kältemittel strömt aufgrund der Schwerkraft durch ein T-Stück 21 in den Bypass 29 zum Hochdruckschwimmer 22, der wiederum lediglich das flüssige Kältemittel in den Sammler 9 passieren lässt und das Durchströmen gasförmigen Kältemittels verhindert. Der Bypass 29 mit dem darin angeordneten Hochdruckschwimmer 22 wirken als Kondensatabscheider, wobei über dem Hochdruckschwimmer 22 lediglich sehr geringe Druckunterschied zwischen Eintritt und Austritt zu verzeichnen sind, die im Wesentlichen auf Druckverluste innerhalb der Komponenten des Kältemittelkreislaufes zurückzuführen sind. Sowohl der Wärmeübertrager 7, der Kondensator 8 und der Sammler 9 sind mit Kältemittel bei Hochdruck beaufschlagt.

Im Winterbetrieb, das heißt bei großem Bedarf an Heizleistung, wird das Kältemittel zum großen Teil oder vollständig im Wärmeübertrager 7 des Systems der Wärmerückgewinnung verflüssigt, sodass nur eine sehr geringe oder keine Dampfmenge aus dem Wärmeübertrager 7 austritt. Die austretende Dampfmenge wird durch das Ventil 24 in den Kondensator 8 geleitet und dort verflüssigt. Das Ventil 23 ist geschlossen.

Der Öffnungsgrad des Ventils 24 ist abhängig von der Leistung des Wärmeübertragers 7 des Systems der Wärmerückgewinnung, vom Kondensationsdruck des Kältemittels und der Austrittstemperatur des Wärmeträgermediums des Wärmeübertragers 7, das heißt der Vorlauftemperatur des Wärmeträgers, regelbar und wird aus diesem Grund auch als Regelventil bezeichnet.

Der Kondensationsdruck wird mittels eines Drucksensors 26 am Eintritt des Wärmeübertragers 7 bestimmt. Die Vorlauftemperatur des Wärmeträgers des Systems zur Wärmerückgewinnung wird mittels eines Temperatursensors 27 am Austritt des Wärmeträgers aus dem Wärmeübertrager 7 gemessen. Die ermittelten Werte des Kondensationsdrucks und der Vorlauftemperatur des Wärmeträgers werden über eine gestrichelt angegebene Wirkleitung an eine Regelvorrichtung 25 übermittelt. Die Regelvorrichtung 25 ist wiederum mit dem Regelventil 24 verbunden und dient dem Regeln des Öffnungsgrades des Ventils 24.

Bei Ansteigen des Kondensationsdruckes, beispielsweise infolge des Zuschaltens eines oder mehrerer Verdichter 5, 6 bei Kältebedarf eines oder mehrerer Verbraucher, wird der Öffnungsgrad des Regelventils 24 erhöht, um dem Ansteigen des Druckes über einen bestimmten Wert entgegenzuwirken. Das Überschreiten eines Maximalwertes des Druckes würde zum Abschalten der Verdichter 5, 6, die mit einem Hochdruckwächter versehen sind, und damit zum Ausfall der Kälteleistung und der Heizleistung bei den Verbrauchern führen. Als Hochdruckwächter wird eine Abschaltautomatik eines Verdichters 5, 6, bestehend aus einem Drucksensor und einem Schalter, bezeichnet, die bei Überschreiten eines Druckes, bei dem der Verdichter 5, 6 aus Sicherheitsgründen maximal arbeitet, die Stromversorgung des Verdichtermotors unterbricht.

Die Vorlauftemperatur des Wärmeträgers wird innerhalb der Regelvorrichtung 25 mit dem Wert einer dort hinterlegten Heizkurve verglichen. Mittels der Heizkurve wird der Wert der Vorlauftemperatur in Abhängigkeit der Außenlufttemperatur bestimmt. Ist die über den Sensor 27 bestimmte Vorlauftemperatur geringer als die als Sollwert der Heizkurve entnommene Temperatur, wird der Querschnitt des Regelventils 24 verringert. Damit steigt der Kondensationsdruck an. Die Verdichtungsendtemperatur des Kältemittels wird größer, sodass auch die Vorlauftemperatur des Wärmeträgers erhöht wird. Ist die über den Sensor 27 bestimmte Vorlauftemperatur größer als die als Sollwert der Heizkurve entnommene Temperatur, wird entweder der Querschnitt des Regelventils 24 vergrößert oder der Massestrom des Wärmeträgers wird mittels nicht dargestellter Regelorgane innerhalb des Wärmeträgerkreislaufes erhöht. Die Vergrößerung des Querschnitts des Regelventils 24 bewirkt, dass der Kondensationsdruck des Kältemittels und damit auch die Eintrittstemperatur des Kältemittels in den Wärmeübertrager 7 geringer werden, was wiederum zu einer Verringerung der Vorlauftemperatur des Wärmeträgers führt. Die Erhöhung des Massestroms des Wärmeträgers führt zu einer größeren an das System der Wärmerückgewinnung übertragen Heizleistung und/oder zu einer Verringerung der Vorlauftemperatur des Wärmeträgers.

Beim Betrieb der Kälteanlage 1 mit erforderlichem Heizbedarf wird der Hochdruck des Kältemittelkreislaufes, auch als Kondensationsdruck bezeichnet, mittels des Öffnungsgrades des Strömungsquerschnittes des Regelventils 24 geregelt. In Betriebsfällen ohne Heizbedarf, das heißt mit funktionslosem Wärmeübertrager 7 des Systems der Wärmerückgewinnung, erfolgt die vollständige Verflüssigung des Kältemittels im Kondensator 8 bei einer Temperatur und dem dazugehörigen Sättigungsdruck beziehungsweise Kondensationsdruck, die von der Temperatur des Kühlmittels abhängen. Beim luftbeaufschlagten Kondensator 8 hängt der Kondensationsdruck dann von der Temperatur der Umgebungsluft als Kühlmittel ab.

Das aus dem Wärmeübertrager 7 des Systems der Wärmerückgewinnung ausströmende flüssige Kältemittel wird über den Bypass 29 und durch den Hochdruckschwimmer 22 um den Kondensator 8 herum direkt in den Sammler 9 geleitet und dort mit dem im Kondensator 8 verflüssigten Kältemittel vermischt.

Das flüssige Kältemittel wird über die Flüssigkeitsleitung 18, die den Sammler 9 mit den Verbrauchern verbindet, auf die unterschiedlichen Verdampfer 2, 3, 4 verteilt und vor dem Eintritt in die Verdampfer 2, 3, 4 mit Hilfe von Expansionsventilen 11, 13, 15 auf das gewünschte Druckniveau entspannt. Der Vorgang der Verdampfung zur Bereitstellung der Kälteleistung der Normalkühlung findet dabei auf einem anderen Druckniveau statt als der Vorgang der Verdampfung zur Bereitstellung der Kälteleistung zur Klimatisierung und zur Wärmeaufnahme im Wärmepumpenkreislauf. Die in Fig. 1 als einzelne Komponenten dargestellten Verdampfer 2, 3, 4 können ebenso als Verbunde aus mehreren Verdampfern ausgebildet sein. Die Kälteleistung der Normalkühlung wird auf einem Temperaturniveau zwischen -5 °C und -15 °C sowie die Kälteleistung zur Klimatisierung auf einem Temperaturniveau zwischen 0 °C und 10 °C bereitgestellt. Im speziellen Anwendungsfall werden die Verdampfer 2 der Normalkühlung bei einer Verdampfungstemperatur von -8 °C und die Verdampfer 3, 4 zur Klimatisierung und der integrierten Wärmepumpenschaltung bei einer Verdampfungstemperatur von +8 °C betrieben. Die einzelnen Verdampfer 2, 3, 4 sind über Magnetventile 10, 12, 14 zu- und abschaltbar ausgebildet.

Das verdampfte, gasförmige Kältemittel gelangt über Saugleitungen 19, 20 zu den Verdichtern 5, 6 zurück. Der Kreislauf ist geschlossen.

Der Kältemittelkreislauf kann zusätzlich mit inneren Wärmeübertragern als thermische Verbindungen zwischen der Flüssigkeitsleitung 18 und der Saugleitung 19, 20 ausgestaltet sein (nicht dargestellt). Die inneren Wärmeübertrager sind dabei jeweils in Strömungsrichtung auf der Hochdruckseite beziehungsweise innerhalb der Flüssigkeitsleitung 18 zwischen dem Magnetventil 10, 12, 14 und dem Expansionsventil 11, 13, 15 und innerhalb der Saugleitung 19, 20 zwischen dem Verdampfer 2, 3, 4 und dem Verdichter 5, 6 angeordnet. Die Wärme wird dabei vom flüssigen Kältemittel nach dem Austritt aus dem Sammler 9 an das gasförmige Kältemittel vor dem Eintritt in den Verdichter 5, 6 übertragen. Das Kältemittel wird einerseits hochdruckseitig unterkühlt und andererseits vor dem Eintritt in den Verdichter 5, 6 überhitzt.

Die Kälteleistungen der Verdampfer 2, 3, 4 variieren je nach Tages- und Jahreszeit. Je nach Bedarf innerhalb des Systems der Wärmerückgewinnung wird die Wärmeleistung durch die in den Verdampfern 2, 3, 4 aufgenommenen Leistungen zuzüglich der dem Kältemittel während der Verdichtervorgänge zugeführten Wärme abgedeckt. Weichen die geforderte Wärmeleistung und die Summe der zugeführten Leistungen derart voneinander ab, dass die Wärmeleistung innerhalb des Systems der Wärmerückgewinnung nicht abgedeckt werden kann, wird der Verdampfer 4 des Kreislaufes der Wärmepumpe zugeschaltet. Die dabei aufgenommene Wärme und während des Verdichtungsvorganges zugeführte Wärme stehen als zusätzliche Leistungen dem System der Wärmerückgewinnung zur Verfügung. Der Verdampfer 4 des Kreislaufes der Wärmepumpe ist ebenso wie der Kondensator 8 luftbeaufschlagt.

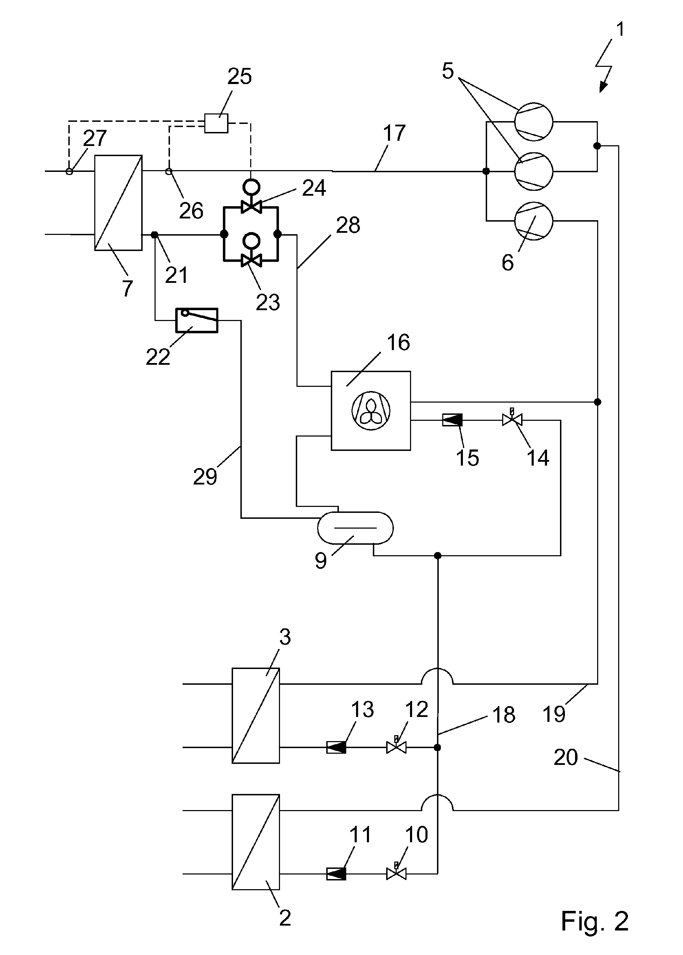

Fig. 2 zeigt das Fließbild der Kälteanlage 1 mit Komponenten zur Wärmerückgewinnung, integrierter Wärmepumpenschaltung und integriertem Kondensator-Verdampfer 16 als Wärmeübertrager, der den Kondensator 8 der Kälteanlage 1 und den Verdampfer 4 der integrierten Wärmepumpenschaltung gegenüber der in Fig. 1 dargestellten Schaltung als integrales Bauteil verbindet.

Durch die Verschachtelung der Kreisläufe des integrierten Kondensator-Verdampfers 16 ineinander, auch als Verflüssiger mit integrierter Verdampferschlange bezeichnet, ergeben sich wesentliche Vorteile beim Betrieb der Kälteanlage 1.

Durch die Doppelnutzung des integrierten Kondensator-Verdampfers 16 ist der Betrieb auch bei Temperaturen um 0 °C möglich, ohne dass ein zusätzliches System zur Abtauung des Verdampfers 4 der Wärmepumpe benötigt wird. Durch Abschalten des Verdampfers 4 und Zuschalten des Kondensators 8, bei gegebenenfalls reduzierter Wärmeleistung des Systems der Wärmerückgewinnung, wird das Abtauen durch die Wärmeabgabe des Kältemittels während der Kondensation realisiert.

Durch die Integration des Verdampfers 4 der Wärmepumpenschaltung und des Kondensators 8 der Kälteanlage ergibt sich eine große Fläche zur Wärmeübertragung, was wiederum den Vorgang der Wärmeübertragung zu geringeren Temperaturdifferenzen vorteilhaft verändert. Dadurch kann die Verdampfung des Kältemittels im Kreislauf der Wärmepumpe bei höherer Temperatur und die Kondensation des Kältemittels bei geringerer Temperatur erfolgen, was zu einer Verringerung der zuzuführenden Verdichterleistung führt.

Des Weiteren wird der Platzbedarf durch die Integration zweier Wärmeübertrager in einem Bauelement verringert.

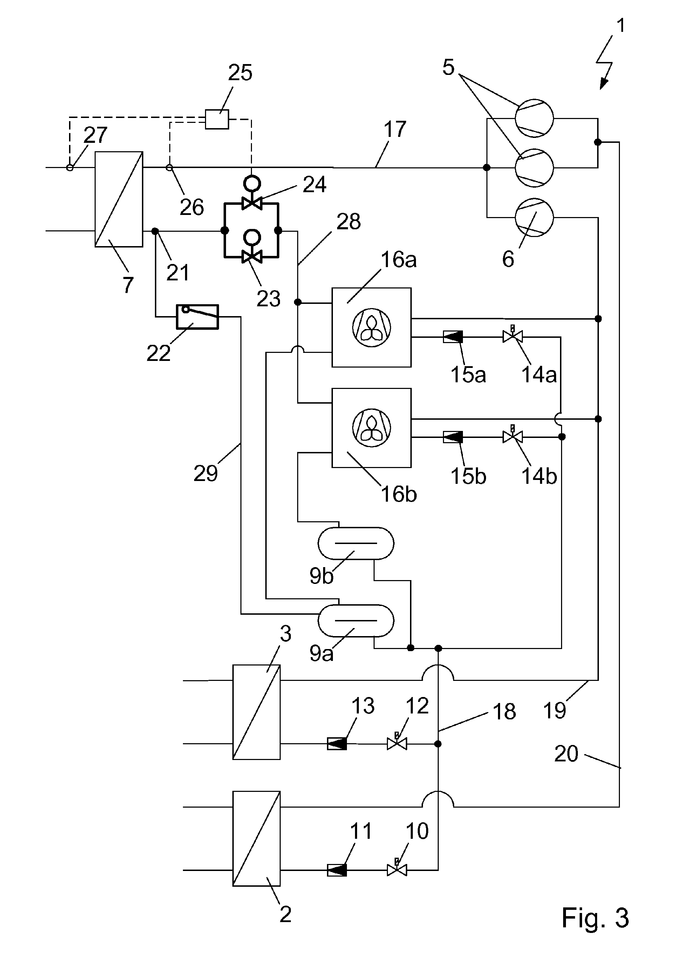

In Fig. 3 ist das Fließbild der Kälteanlage 1 mit Komponenten zur Wärmerückgewinnung, integrierter Wärmepumpenschaltung und zweigeteiltem, luftbeaufschlagtem integriertem Kondensator-Verdampfer 16a, 16b mit zugehörigen Magnetventilen 14a, 14b und Expansionsventilen 15a, 15b dargestellt. Jedem Teil des zweigeteilten Kondensator-Verdampfers 16a, 16b ist ein Sammler 9a, 9b nachgeschaltet. Der erste Teil des Kondensator-Verdampfers 16a ist mit dem dazugehörigen Sammler 9a zum zweiten Teil des Kondensator-Verdampfers 16b mit dem dazugehörigen Sammler 9b parallel geschaltet.

Beide Abschnitte des Kondensator-Verdampfers 16a, 16b sind als Kondensatoren mit dem jeweils zugehörigen Sammler 9a, 9b je nach den Außenbedingungen oder den Betriebsverhältnissen separat, oder aber beide Teile parallel, betreibbar.

Im Winterbetrieb, bei dem im Verdampfer des Kondensator-Verdampfers 16a, 16b der Wärmepumpenschaltung Wärme aufgenommen wird, ist lediglich ein Teil des Kondensator-Verdampfers 16a und der nachgeschaltete Sammler 9a kältemittelbeaufschlagt. Der zweite Teil des Kondensator-Verdampfers 16b mit Sammler 9b wird leer gesaugt, das heißt der Kondensator des Kondensator-Verdampfers 16b und der Sammler 9b sind nicht mit Kältemittel beaufschlagt. Die Leitungen sind dabei durch Ventile (nicht dargestellt) so verschlossen, dass die genannten Komponenten vom übrigen Kältemittelkreislauf abgetrennt sind. Ansonsten könnte sich das Kältemittel innerhalb der sich nicht in Betrieb befindlichen Komponenten sammeln und somit dem Kältemittelkreislauf entzogen werden. Die fehlende Kältemittelmenge müsste durch eine größere Gesamtmenge kompensiert werden. Durch das Abtrennen nicht genutzter Komponenten kann vorteilhaft die Kältemittelmenge beziehungsweise Füllmenge der Anlage minimiert werden. Eine geringere Kältemittelmenge, insbesondere bei Anlagen mit brennbaren Kältemitteln, reduziert die von ihr ausgehende Gefahr durch Explosionen bei Leckage oder Havarie deutlich.

Im Sommerbetrieb sind beide Teile des Kondensator-Verdampfers 16a, 16b und die dazugehörigen Sammler 9a, 9b kältemittelbeaufschlagt.

Der zweigeteilt ausgebildete Kondensator-Verdampfer 16a, 16b wird über die Steuerung von Ventilen betrieben.

Die vorliegende Erfindung kann überall da eingesetzt werden, wo Kälteanlagen zur Kühlung benötigt werden und gleichzeitig ein Wärmebedarf vorhanden ist. Dabei kann jedes herkömmliche, insbesondere aber brennbare, Kältemittel eingesetzt werden.

### LISTE DER BEZUGSZEICHEN

- 1: Kälteanlage
- 2: Verdampfer (Normalkühlung)
- 3: Verdampfer (Klimakühlung)
- 4: Verdampfer (Wärmepumpe)
- 5: Verdichter/Verdichtereinheit (Normalkühlung)
- 6: Verdichter/Verdichtereinheit (Klimakühlung/Wärmepumpe)
- 7: Wärmeübertrager (Wärmerückgewinnung)
- 8: Kondensator
- 9, 9a, 9b: Sammler
- 10, 12: Magnetventil
- 14, 14a, 14b: Magnetventil
- 11, 13: Expansionsorgan/Expansionsventil
- 15, 15a, 15b: Expansionsorgan/Expansionsventil
- 16, 16a, 16b: integrierter Kondensator-Verdampfer, Kondensator, Verdampfer
- 17: Druckleitung
- 18: Flüssigkeitsleitung
- 19, 20: Saugleitung
- 21: T-Stück
- 22: Hochdruckschwimmer
- 23: Ventil
- 24: Ventil, Regelventil
- 25: Regelvorrichtung
- 26: Sensor, Drucksensor
- 27: Sensor, Temperatursensor
- 28: Verbindungsleitung
- 29: Bypass

## Patentansprüche

1. Kälteanlage (1) mit einem geschlossenen Kältemittelkreislauf, aufweisend in Strömungsrichtung des Kältemittels mindestens eine Verdichtereinheit (5, 6), einen Wärmeübertrager (7) eines Systems zur Wärmerückgewinnung, einen Kondensator (8, 16), einen Sammler (9), ein Expansionsorgan (11, 13, 15) und einen Verdampfer (2, 3, 4), **dadurch gekennzeichnet, dass** zwischen dem Wärmeübertrager (7) des Systems der Wärmerückgewinnung und dem Kondensator (8, 16) ein Regelventil (24) angeordnet ist und dass das Regelventil (24) mit einer Regelvorrichtung (25) verbunden ist, wobei der Öffnungsgrad des Regelventils (24) abhängig von der Leistung des Wärmeübertragers (7) des Systems der Wärmerückgewinnung, vom Kondensationsdruck des Kältemittels und von der Austrittstemperatur des Wärmeträgermediums des Wärmeübertragers (7) des Systems der Wärmerückgewinnung zwischen 0 % und 100 % regelbar ist.

2. Kälteanlage (1) nach Anspruch 1, **dadurch gekennzeichnet, dass** die Regelvorrichtung (25) einen Sensor (26) zum Bestimmen des Kondensationsdrucks des Kältemittels sowie einen Sensor (27) zum Bestimmen der Austrittstemperatur des Wärmeträgermediums des Wärmeübertragers (7) aufweist.

3. Kälteanlage (1) nach Anspruch 1 oder 2, **dadurch gekennzeichnet, dass** zu dem Regelventil (24) parallel ein weiteres Ventil (23) geschaltet ist, wobei die maximale Querschnittsfläche für das durchströmende Kältemittel des Ventils (23) einen größeren Durchmesser aufweist als die maximale Querschnittsfläche des Regelventils (24).

4. Kälteanlage (1) nach einem der Ansprüche 1 bis 3, **dadurch gekennzeichnet, dass** zwischen dem Ausgang des Wärmeübertragers (7) des Systems der Wärmerückgewinnung und dem Sammler (9) ein Bypass (29) angeordnet ist, sodass das Kältemittel nach dem Austritt aus dem Wärmeübertrager (7) direkt in den Sammler (9) leitbar ist, ohne durch den Kondensator (8, 16) zu strömen.

5. Kälteanlage (1) nach Anspruch 4, **dadurch gekennzeichnet, dass** in dem Bypass (29) ein Hochdruckschwimmer (22) angeordnet ist, wobei der Hochdruckschwimmer (22) im Wärmeübertrager (7) verflüssigtes Kältemittel in den Sammler (9) passieren lässt und das Durchströmen gasförmigen Kältemittels verhindern kann, sodass das Regelventil (24) ausschließlich mit gasförmigem Kältemittel beaufschlagt ist.

6. Kälteanlage (1) nach einem der Ansprüche 1 bis 5, **dadurch gekennzeichnet, dass** der Kondensator (16) mit nachgeschaltetem Sammler (9) zweigeteilt ausgebildet ist und eine Steuereinrichtung mit Ventilen vorgesehen ist, wobei mittels der Steuereinrichtung und den Ventilen ein Teil des Kondensators (16a, 16b) mit dazugehörigem Sammler (9a, 9b) vom Kältemittelkreislauf abtrennbar ist, sodass jeweils nur ein Teil des Kondensators (16a, 16b) mit dazugehörigem Sammler (9a, 9b) mit Kältemittel beaufschlagt wird oder beide Teile des Kondensators (16a, 16b) mit dazugehörigen Sammlern (9a, 9b) gleichzeitig mit Kältemittel beaufschlagt werden.

7. Verfahren zum Betrieb einer Kälteanlage (1) nach einem der vorhergehenden Ansprüche, **dadurch gekennzeichnet, dass** die Öffnungsgrade des Regelventils (24) und eines dem Regelventil (24) parallel geschalteten Ventils (23) abhängig von der Leistung des Wärmeübertragers (7) des Systems der Wärmerückgewinnung jeweils zwischen 0 % und 100 % und damit die Masseströme des Kältemittels durch die Ventile (23, 24) geregelt werden.

8. Verfahren zum Betrieb einer Kälteanlage (1) nach Anspruch 7 im Betrieb mit Wärmerückgewinnung folgende Schritte umfassend:
- Schließen des Ventils (23),
- Bestimmen des Kondensationsdrucks des Kältemittels und Vergleich mit einem Maximalwert,
- Bestimmen der Austrittstemperatur des Wärmeträgermediums des Wärmeübertragers (7) des Systems der Wärmerückgewinnung und Vergleich mit einem Sollwert und
- Regeln des Öffnungsgrades des Regelventils (24), abhängig vom Kondensationsdruck des Kältemittels und der Austrittstemperatur des Wärmeträgermediums des Wärmeübertragers (7) des Systems der Wärmerückgewinnung.

9. Verfahren zum Betrieb einer Kälteanlage (1) nach Anspruch 7 im Betrieb ohne Wärmerückgewinnung folgende Schritte umfassend:
- vollständiges Öffnen des Ventils (23) und
- Schließen des Regelventils (24).

10. Verfahren zum Betrieb einer Kälteanlage (1) nach einem der Ansprüche 7 bis 9, **dadurch gekennzeichnet, dass** das verdichtete Kältemittel innerhalb des Wärmeübertragers (7) des Systems der Wärmerückgewinnung enthitzt und/oder verflüssigt wird und am Austritt des Wärmeübertragers (7) dampfförmig vorliegendes Kältemittel im Kondensator (8, 16) vollständig verflüssigt wird, wobei
- das im Wärmeübertrager (7) des Systems der Wärmerückgewinnung verflüssigte Kältemittel durch den Bypass um den Kondensator (8, 16) herum geführt und direkt in den Sammler (9) geleitet wird sowie
- der innerhalb des Bypasses angeordnete Hochdruckschwimmer (22) flüssiges Kältemittel passieren lässt und das Durchströmen gasförmigen Kältemittels verhindert, sodass das Regelventil (24) ausschließlich mit gasförmigem Kältemittel beaufschlagt wird.

11. Verfahren zum Betrieb einer Kälteanlage (1) nach einem der Ansprüche 7 bis 10, **dadurch gekennzeichnet, dass** je nach Verflüssigungsleistung
- ein Teil des zweigeteilt ausgebildeten Kondensators (16a, 16b) mit nachgeschaltetem Sammler (9a, 9b) mit Kältemittel beaufschlagt wird und gleichzeitig der andere Teil des zweigeteilt ausgebildeten Kondensators (16a, 16b) mit nachgeschaltetem Sammler (9a, 9b) durch geschlossene Ventile vom Kältemittelkreislauf abgetrennt ist oder
- beide Teile des zweigeteilt ausgebildeten Kondensators (16, 16a, 16b) jeweils mit nachgeschaltetem Sammler (9, 9a, 9b) mit Kältemittel beaufschlagt werden.
